# EUROPEAN PATENT SPECIFICATION

(11) **EP 4 157 671 B1**
(45) Date of publication and mention of the grant of the patent: **12.06.2024**
(21) Application number: 21729266.3
(22) Date of filing: 25.05.2021
(51) Int. Cl.: B60M 1/30, B60M 1/36, B60M 7/00

(54) **ELECTRIC ROAD TRACK**
STROMSCHIENE FÜR ELEKTIFIZIERTE STRASSE
PISTE DE ROUTE ÉLECTRIQUE

(30) Priority: 26.05.2020 SE 2050603
(43) Date of publication of application: 05.04.2023
(73) Proprietor: Elonroad AB, 223 53 LUND (SE)
(72) Inventor: ZETHRAEUS, Dan, 223 53 LUND (SE)
(74) Representative: Zacco Sweden AB
(86) International application number: PCT/EP2021/063812
(87) International publication number: WO 2021/239688

(56) References cited:
- WO-A1-2010/140964
- WO-A1-2011/054181
- US-A- 612 644
- US-B2- 10 017 077

## Description

### Field of the invention

The present invention relates to provision of electric power to vehicles and more specifically to an electric road track for conductively providing electric power to a vehicle.

### Background art

Electric and/or hybrid electric vehicles are becoming more and more common as they provide benefits in terms of reducing the environmental impact of transportation. The personal transportation sector has proven especially prone to change as the nature of such travels usually allows the required flexibility which is required for taking the slightly prolonged stops for recharging the battery of the vehicle, compared to stopping to refuel a conventional vehicle.

For the road bound transportation of cargo, i.e. haulage by means of trucks, it is not desired to have prolonged stops for recharging the batteries. It is further not desired to have to carry the additional load that a battery having the required capacity would constitute as this would affect the amount of cargo that can be transported.

An electric road track alleviates some of the issues described above as it allows charging of batteries on the move and/or provision of electric power for directly powering a vehicle. The size of the batteries can thus be reduced and/or the need for stopping for recharging the batteries can be reduced.

Such electric road tracks are known from WO 2011/054181 A1 and US 10,017,077 B2.

However, as conductive electric road tracks rely on physical contact between components of the vehicle and a conductive element of the electric road track, certain problems arise. For instance, it is desired that the electric road track does not affect the properties of the road into which it is integrated negatively. E.g., it is desired that road friction available to the vehicle travelling thereon is not significantly reduced.

This should preferably be achieved while at the same time avoiding that a power collector of the vehicle gets subjected to excessive wear from its interaction with the electric road track.

### Summary of the invention

In view of that stated above, the object of the present invention is to provide an electric road track which improves on prior art and which mitigates at least some of problems with prior art solutions.

To achieve at least one of the above objects and also other objects that will be evident from the following description, an electric road track having the features defined in claim 1 is provided. Preferred embodiments of the electric road track will be evident from the dependent claims.

More specifically, there is provided according to the present invention an electric road track configured to conductively provide electric power to a vehicle. The electric road track comprises a base extending along the electric road track and being configured to be arranged against a road; a contact line, extending along the base, via which power collectors of the vehicle is configured to conductively draw electric power from the electric road track. The contact line comprising friction enhancing portions arranged along the electric road track. Each friction enhancing portion comprises a friction element and a plate, the plate is resiliently depressible towards the base upon a force exceeding a threshold value is exerted onto said plate, such that the friction element is exposed. The friction of the electric road track is thus increased when a tire of the vehicle encounters a friction enhancing portion.

The threshold value of the force required for depressing the plate prevents the friction element to be exposed when for instance a power collector of the vehicle passes over it, avoiding damage or wear to be caused to the power collector. Increased friction is thus provided on demand, i.e. when the plate is subjected to a force exceeding the threshold value.

The threshold value may be a force corresponding to a weight of 10 kg exerted onto the plate. The force generated by a power collector is typically significantly lower, corresponding to around 2-3 kg, which prevents the plate to be depressed by the power collector. A tire of a vehicle passing over the friction enhancing portion will however apply a force that is significantly higher than the threshold force which facilitates pressing down the plate and exposing the friction element.

The friction enhancing portion may comprise a frame surrounding the plate, the frame providing additional friction to the friction enhancing portion.

The plate may comprise a plurality of openings and a friction element may be arranged in each of the plurality of openings. The friction elements are thus distributed over the plate of the friction enhancing portion.

The friction element may be fixedly arranged in relation to the base, facilitating that the friction elements are arranged in the desired position in relation to the surrounding surface of the electric road track when the vehicle passes over it. Further still, in certain applications, reduced complexity is desired where the number of moving parts of the friction enhancing portion are reduced. Having fixed friction elements facilitates a reduction in complexity.

An area of the plurality of openings may be 10% to 40% of an upper surface area of the plate, ensuring that a desired friction is achieved by the friction elements against a tire of the vehicle. If the relationship of the area of the plurality of openings in relation to the upper surface area of the plate is too big, the tire will be carried by the friction elements without the friction elements sinking into the tire which is detrimental for achieving the desired friction. The aforementioned relationship provides the desired friction without causing any damage to the tire when passing over a friction enhancing portion.

The plate may have an extension in the longitudinal direction of the electric road track between 50 mm and 400 mm and an extension in a direction transverse to the longitudinal direction of electric road track between 50 mm and 400 mm. The plate will thus be sufficiently large to provide a large enough surface area which provides increased friction to the vehicle, while not being too large such that the weight of the plate prevents it from being sufficiently depressed when a vehicle passes over it. The plate should preferably be made from a metallic material having sufficiently high corrosion resistance properties, having low electrical resistance as well as having sufficiently high structural strength and resistance to wear. A plate being to large may result in an inertia for achieving movement of the plate that is too high such that the friction element is not sufficiently exposed to the tire during the brief moment that a tire of the vehicle is in contact with the friction enhancing portion.

The electric road track may further comprise a seal configured to seal between the plate and the friction element. The seal prevents any dirt or debree from the road from accumulating in the friction enhancing portion, which reduces the need for maintenance and the wear of the friction enhancing portion. Moreover, the seals facilitate a reduction in wear for the power collectors of the vehicle from being subjected to sharp edges of the friction element and thus reduces undesired wear of the power collectors as well.

The plate of each friction enhancing portion may be connected to the electric road track via a resilient member. The resilient member which could be in the shape of a plate shaped member of for instance rubber or of another resilient material. The resilient member could also be formed from one or several springs, such as blade springs or coil springs etc. The resilient member provides reliable reciprocal movement of the plate of the friction enhancing portion.

The plate may be electrically conductive, providing uninterrupted electric power provision to the vehicle. The increased friction can thus be provided without reducing the electric road tracks capacity of providing electric power to the vehicle.

The resilient member may further be electrically conductive, reducing the need for any dedicated electric wiring for providing electricity to the plate.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 discloses a top view of an electric road track.
Fig. 2 discloses a perspective view of an electric road track comprising a friction enhancing portion.
Fig. 3 discloses a top view of an electric road track.
Fig. 4 discloses a top view of an electric road track.
Fig. 5 discloses a top view of an electric road track.
Fig. 6 discloses a top view of an electric road track.
Fig. 7 discloses a cross section view of a friction enhancing portion of an electric road track.
Fig. 8 discloses a cross section view of a friction enhancing portion of an electric road track.
Fig. 9 discloses a cross section view of a friction enhancing portion of an electric road track.
Fig. 10 discloses a top view of a friction enhancing portion of an electric road track.
Fig. 11 discloses a diagram showing a measured friction over an electric road track having friction enhancing portions.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

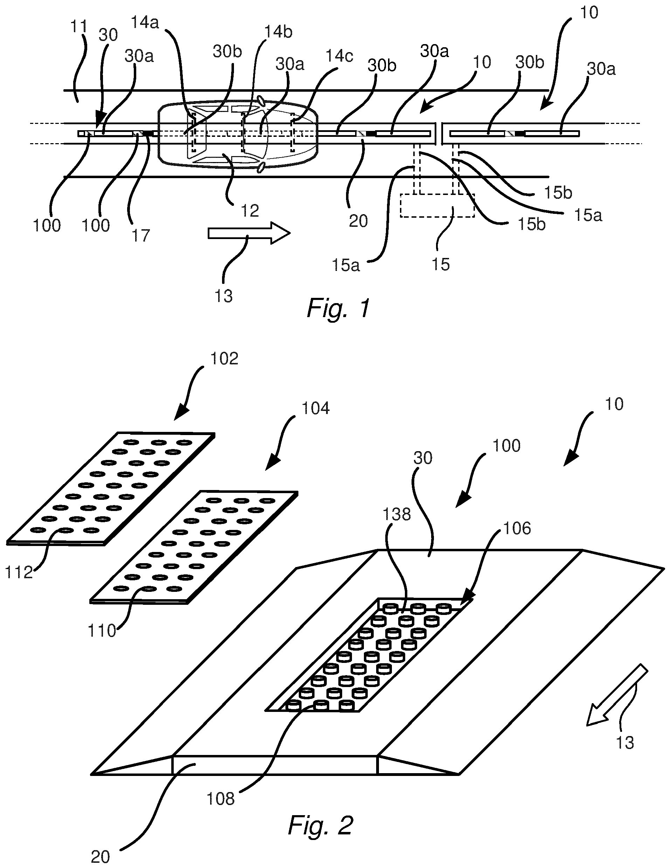

An electric road track 10 is illustrated in Fig. 1. The electric road track 10 is mounted on a road 11. In Fig. 1 a vehicle 12, here in the form of an electric car, is travelling on the road in the direction indicated by 13. The electric road track 10 extends along the intended travelling path of the road 11.

The general function of the electric road track 10 is that it provides electrical power to electric vehicles travelling along the road. Thus, a battery of the electric vehicle can be charged while the electric vehicle is travelling on the road. Alternatively, or in combination, the motors of the electric vehicles can be continuously powered by electricity. For powering and/or charging the electric vehicle 12 the electric road track 10 may be arranged to provide power through the electrical road track 10 to which power collectors 14a, 14b, 14c of the car 12 can connect. Hence, the electrical power is conducted from the electrical road track 10 to the electric vehicle 12.

The electrical road track 10 may form a single track and comprises a base 20 and a contact line 30 which may comprise a plurality of segments 30a, 30b. The contact line 30 is thus to be considered the portion of the electric road track 10 that faces upwards towards the vehicle 12 and which is configured to transfer electric power to the power collectors 14a, 14b, 14c and should thus be exposed while the remaining portions of the electric road track 10 may be covered e.g. by asphalt. The base 20 forms the structural part of the electric road track 10 and may further form a housing for housing the components of the electric road track 10.

The segments 30a, 30b are separated along the contact line 30 by electrically isolating members 17. Every second segment 30a may be configured to be powered by a power station 15. The segments 30a configured to be powered by a power station 15 may form a first set of segments 30a. The power station 15 may e.g. be located at the side of the road. The power station 15 may be connected to the electrical road track 10 via conductors 15a, 15b. Upon being powered by a positive potential segment from the first set of segments 30a forms a positive pole. The other segments 30b form a second set of non-powered segments 30b. The non-powered segments 30b may be set to have the same potential as ground. Alternatively, a segment of the first set of segments 30a may be powered by a negative potential and thus form a negative pole. Upon powering one of the segments 30a of the first set of segments, a voltage difference is created between the powered segment 30a and the non-powered segments 30b. Hence, the electric road track 10 may be segmented into a plurality of segments arranged to provide alternating potentials.

The power collectors 14a, 14b, 14c are preferably arranged such that, at any moment during travelling, at least one of the power collectors 14a, 14b, 14c is in connection with a segment 30a of the first set of segments 30a and at least one other of the power collectors 14a, 14b, 14c is in connection with a segment 30b of the second set of segments 30b. Thus, continuous collection of power from the electrical road track 10 may be achieved upon the segments 30a of the first set of segments 30a are being powered.

The electrical road track 10 extends along the road 11. The segments 30a, 30b may have a length, along an extension in the traveling direction 13 of the vehicle, being shorter than a length of the vehicle 12. According to a non-limiting example the length of the segments 30a, 30b are around 1 m long. The electrically isolating member 17 may be about 10-30 cm long. A plurality of electrical road tracks 10 can be arranged after each other. As can be seen in Fig. 1, two electric road tracks 10 are arranged after each other.

In the aforementioned, an electric road track 10 is exemplified that the teachings herein may be applied to, it is however to be realized that the electric road track 10 may be embodied in other ways as well.

The electric road track 10 comprises friction enhancing portions 100 arranged along the electric road track 10. The friction enhancing portions 100 are arranged on the contact line 30 such that a tire of the vehicle 12, when travelling on the road 11 and passing over the electric road track 10, can make contact with the friction enhancing portions 100.

As is illustrated e.g. in Fig. 2, each friction enhancing portion 100 comprises a friction element 108 and a plate 102. The plate 102 is shown removed from a frame/recess 106 in the electric road track 10 into which it is configured to be arranged.

In Fig. 1, the friction enhancing portion 100 is shown being provided with a plurality of friction elements 108 in the shape of cylindrical studs 108, which protrudes from a base surface 138 in the friction enhancing portion 100. The friction enhancing elements 108 are however not limited to studs 108 having a circular cylindrical shape, the friction elements 108 may have oval or elliptic cylindrical shape. The friction elements 108 may further be formed as prisms having square, rectangular, triangular or heptagonal or e.g hexagonal base shapes. The friction elements 108 may further have a tapering shape such as a truncated conical shape or a truncated pyramidal shape. The frame 106 may further be considered as a friction element, as the frame 106 of the friction enhancing portion 100 adds the friction provided thereby.

Moreover, each friction element 108 may be releasably attached to the base 20, or more specifically to the base surface 138 thereof. For instance, each friction element 108 could be configured to be in threaded engagement with the base 20 such each friction element 108 can be replaced for instance if it is worn or damaged for some reason.

The plate 102 of each friction enhancing portion 100 is resiliently depressible towards the base 20, or towards the base surface 138, upon a force exceeding a threshold value being exerted onto the plate 102, such that the friction element 108 is exposed. The threshold value of the force is such that it prevents the plate 102 from being pressed down by the power collectors 14a, 14b, 14c of the vehicle 12 while it is pressed down by the force generated when a tire of the vehicle 12 passes over the plate 102. The friction element 108 is thereby exposed to the tires of the vehicle 12 which provides increased friction and thus improved safety to the electric road track 10.

The plate 102 should, as mentioned, not move when subjected to the force from the power collectors 14a, 14b, 14c which is typically in the range of 1,5 kg - 3 kg. The tires of the vehicle 12 exerts a significantly higher force onto the plate 102 when they pass over it. The threshold value of the force required to push/depress the plate 102 is therefore preferably approximately equivalent to 10 kg but other threshold values are also considered such as between 20-30 kg.

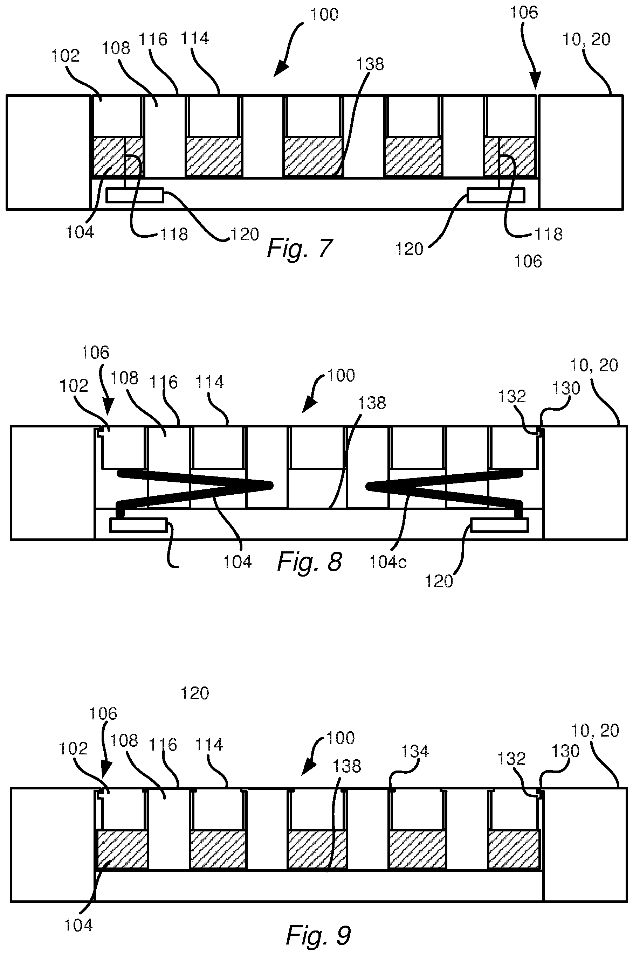

What is further shown in Fig. 1 is that the plate 102 of each friction enhancing portion 100 may be connected to the electric road track 10 via a resilient member 104. The resilient member 104 is in the embodiment shown in Fig. 1 formed by a resilient plate shaped element having essentially the same shape as the plate 102, but it may also be embodied in other ways as will be elaborated further on in relation to Figs 7-9.

The plate 102 preferably comprises a plurality of openings 112 in which a respective friction element 108 is configured to be arranged. The openings 112 in the plate 102 are thus provided with a shape corresponding to that of the friction elements 108. The resilient member 104 may be provided with corresponding openings 110.

Along the length of the electric road track 10 are the friction enhancing portions 100 repeated, preferably such that the spacing between two adjacent friction enhancing portions 100 is between 5 cm and 30 cm, preferably approximately 10 cm.

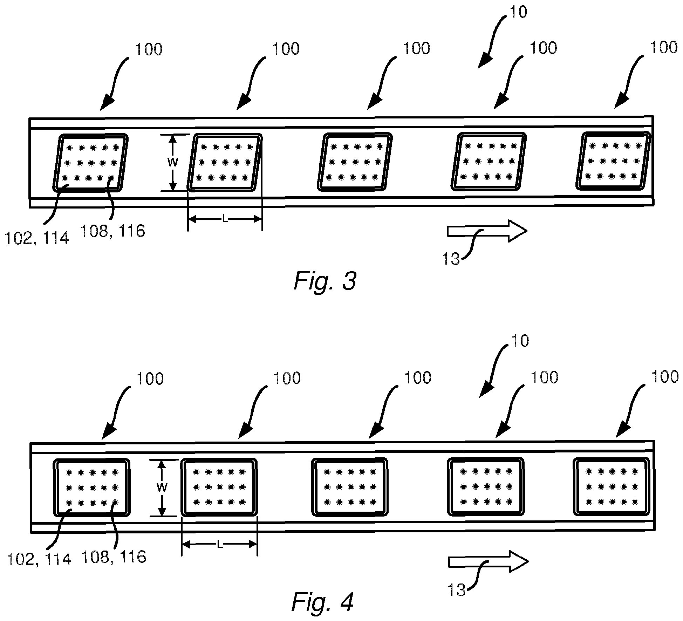

In Fig. 3 is one embodiment of the electric road track 10 shown, the electric road track 10 being provided with five friction enhancing portions 100. Each friction enhancing portion 100 has a length L in the traveling direction 13 that is between 50 mm and 400 mm, preferably approximately 70 mm. It is however possible to provide a friction enhancing portion 100 having a length L that is near or equal to the length of the electric road track 10 to which it is attached. The width of the friction enhancing portion 100 in the direction transverse to the traveling direction 13 is between 50 mm and 400 mm, preferably approximately 60 mm.

The weight of the plate 102 should preferably be kept as low as possible in order to reduce the inertia of achieving movement of the plate 102. The vehicle 12 may move over the electric road track 10 at speed and may thus only briefly be in contact with each friction enhancing portion 100, during which the plate 102 must move such that the friction element 108 makes contact with the tire of the vehicle 12. The weight of the plate 102 may in one embodiment be 200 grams or less.

A combined total surface area of a top surface 116 on each friction element 108 should preferably be between 10% and 40% of the total surface area of the plate 102, or in other words 10% to 40% of the surface area of an upper surface 114 thereof. Such an area relationship has proven beneficial in terms of generating the desired friction as the friction elements 108 will to a desired extent elastically sink into a tire of the vehicle 12 passing over the friction enhancing portion 100, without causing any damage to the tire.

As is illustrated in Figs 3 to 6, when a plurality of friction elements 108 are used, they should preferably be evenly distributed over the friction enhancing portion 100. This further improves the effect described in the aforementioned, improving the friction provided to the vehicle 12 passing over the friction enhancing portion 100.

As is illustrated in Figs 3 to 6, the friction enhancing portion 100 may be provided with a number of different shapes. Other shapes than those shown in Figs 3 to 6 are however also possible.

In Fig. 3, the electric road track 10 comprises friction enhancing portions 100 having a shape of a parallelogram, more particularly as a rhomboid, having two sides extending in the travelling direction 13 and two sides being arranged at angle to the travelling direction 13. The plate 102 and the recess/frame 106 into which it is arranged are thus both provided with corresponding parallelogram/rhomboid shapes.

The edges of the frame/recess 106 being arranged at an angle to the travelling direction provides benefits in terms of the comfort experienced in the vehicle 12 when passing over the friction enhancing portion 100. As the vehicle 12, more specifically the tires thereof, will encounter the friction enhancing portion 100 at an angle to the sides of the frame 106, the impact between the tire and the frame 106 of the friction enhancing portion 100 will be less noticeable. This further reduces eventual wear to the friction enhancing portion 100 which may result from vehicles 12 passing over it repeatedly.

Fig. 4 shows another embodiment in which the friction enhancing portions 100 are rectangular in shape. The rectangular shape of each friction enhancing portion 100 provides benefits in terms of reducing the complexity of the manufacturing of the electric road track 10. Depending on the placement of the electric road track 10, i.e. if it is on a high-speed motorway or on a road where vehicles travel at lower speeds, the angle with which vehicles 12 passes over the electric road track 10 will change. On roads where vehicles 12 travel at lower speeds, the vehicles 12 will tend to pass over the electric road track 10 at steeper angles in relation to the normal travelling direction 13 on the road 11, compared to on a high-speed motorway. The vehicle 12 may thus encounter the electric road portion 100 at a non-perpendicular angle, especially at roads having lower speed limits, even though the sides of the frame 106 along the width W of the friction enhancing portion 100 are perpendicular to the travelling direction 13.

In terms of providing the largest possible friction to the vehicle, it is may be desired to provide edges of the frame 106 being perpendicular to the travelling direction 13 of the vehicle 12 as the frame 106 adds to the friction provided by the friction elements 108.

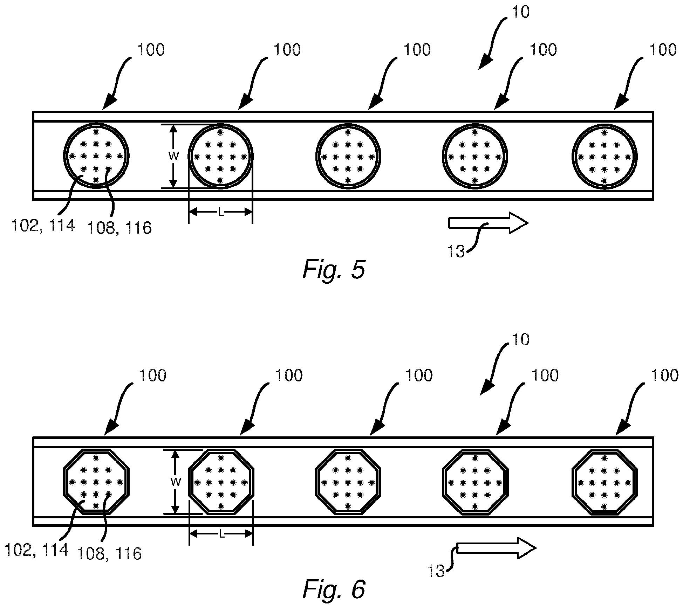

Fig. 5 shows an embodiment of the electric road track 10 in which the friction enhancing portions 100 are provided with a circular shape, i.e. such that the width W equals the length L of each friction enhancing portion 100. The friction enhancing portions 100 could however be oval or elliptic such that the width W is smaller than the length L, or vice versa.

The orientation of the circular friction enhancing portions 100 in relation to the tires of the vehicle 10 will be the same regardless of the angle which a vehicle 12 passes over the electric road track 10 with. Moreover, only a small portion, if any, of the edges of the frame 106 will be arranged perpendicularly to the travelling direction of the vehicle 12 as it passes over it. While this may reduce the friction provided by the frame 106 of the friction enhancing portions 100, the friction available is thus made less dependent on the angle with which the vehicle 12 encounters the friction enhancing element 100 and is thus more consistent.

Fig. 6 shows an electric road track being provided with hexagonally shaped friction enhancing portions 100. The width W equals the length L of the friction enhancing portion 100 shown, the width W could however just as well be less than the length L, or vice versa. Other polygonal shapes are also considered, such as heptagonal, octagonal etc.

The hexagonally shaped friction enhancing portion 100, as for the circularly shaped friction enhancing portion 100, reduces the directional properties thereof. More or less the same functionality is thus achieved regardless of the angle in relation to the normal traveling direction 13 that the vehicle 12 passes over the electric road track 10 with.

Fig. 7 discloses a cross-sectioned view showing a friction enhancing portion 100 on an electric road track 10. In the embodiment shown in Fig. 7, the friction elements 108 are fixedly arranged on the base 20, on the base surface 138 thereof. The plate 102 is moveably arranged in the frame/recess 106 such that is can be depressed upon exertion of a force exceeding the threshold value. Below the plate 102 is a resilient member 104 arranged. The resilient member 104 shown in Fig. 7 is in the shape of a plate which may be made from rubber or from another material having resilient properties. The resilient member 104 may further be attached to the base 20 and/or to the plate 102 by means of an adhesive such as glue.

To avoid interruptions in the provision of electric power to the vehicle 12 travelling over the electric road track 10, the plate 102 in all embodiments disclosed herein may be made from an electrically conductive material. It may be made from for instance stainless steel, from aluminum or another metallic material. It should preferably have a high resistance against corrosion, have low electric resistance, and, as mentioned, be as light as possible.

The plate 102 may be connected to the electrical power conductors 120 by means of electrical connectors 118, the electrical connectors 118 are preferably flexible such that they can accommodate the reciprocal movement of the plate 102.

Also applicable to all embodiments disclosed herein, the relationship of the upper surface 114 of the plate 102 and the top surface 116 on each friction element 108 when the plate 102 is in its upper position, i.e. when it is not pressed down, should preferably be such that the upper surface 114 is situated above the top surface 116 of the friction elements 108. The upper surface 114 of the plate 102 may be arranged 0,1 mm to 0,4 mm, preferably approximately 0,2 mm above the top surface 116 of the friction elements 108. This prevents the friction elements 108 from catching on the power collectors 14a, 14b, 14c of the vehicle 12, avoiding excessive wear thereof as well as wear on the friction elements 108.

Fig. 8 discloses a cross-sectioned view of an electric road track 10 and a friction enhancing portion 100 according to another embodiment in which the resilient member 104 is in the form of a blade spring. The blade spring 104 is preferably manufactured from spring steel or another similar resilient material. The resilient member 104 could however also be formed e.g. as coil springs.

It is in Fig. 8 further shown that the resilient member 104 may be electrically conductive such that the resilient member 104 forms the electric connector between the electric power conductors 120 and the plate 102, thus reducing the need for separate electric connectors 118 as is shown in Fig. 7. It is however to be realized that the resilient member 104 shown in Fig. 8 could be used also with separate electric connectors 118.

What is further illustrated in Fig. 8 is that the plate 102 may be provided with stop members 132, in the shape of a lip and/or ledge, that are configured to cooperate with stop members 130, which may also be in the shape of a lip and/or ledge, provided on the frame 106. The stop members 130, 132 are not limited to the shape shown in Figs 8 and 9, they could also be provided with a chamfered or a tapered shape. Further still, shown in Fig. 9, similar stop members 134 could additionally or alternatively be provided on the friction elements 108 which are configured to cooperate with the plate 102 or a corresponding stop member (not shown) on the plate 102.

The respective stop members 130, 132, 134 facilitates reliably defining the position of the plate 102 in its upper position, i.e. when it is not pressed down by a tire of a vehicle 12. They further prevent any edge of the plate 102 undesirably protruding above the surrounding surface of the electric road track 10 around the frame 106.

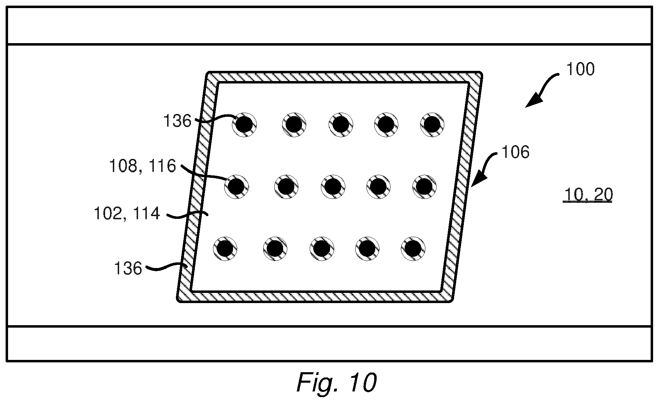

Fig. 10 shows a friction enhancing portion 100 of the electric road track 10 from a top view. The electric road track 10, specifically the friction enhancing portion 100, is provided with a seal 136 configured to seal between the plate 102 and the friction element 108. The seal 136 may further be configured to seal between the plate 102 and the frame 106.

The seal 136, which may be out of rubber or silicone, may be formed by a plurality of separate seals 136 around each friction element 108 or be integrally formed in one part. The seal 136 may further be formed by the resilient member 104. The seal 136 prevents road dirt from accumulating in the friction enhancing portion 100 which could otherwise prevent movement thereof. The seal 136 will also provide a reduced wear to the power collectors 14a, 14b, 14c of the vehicle 12 as they passes over each friction enhancing portion 100.

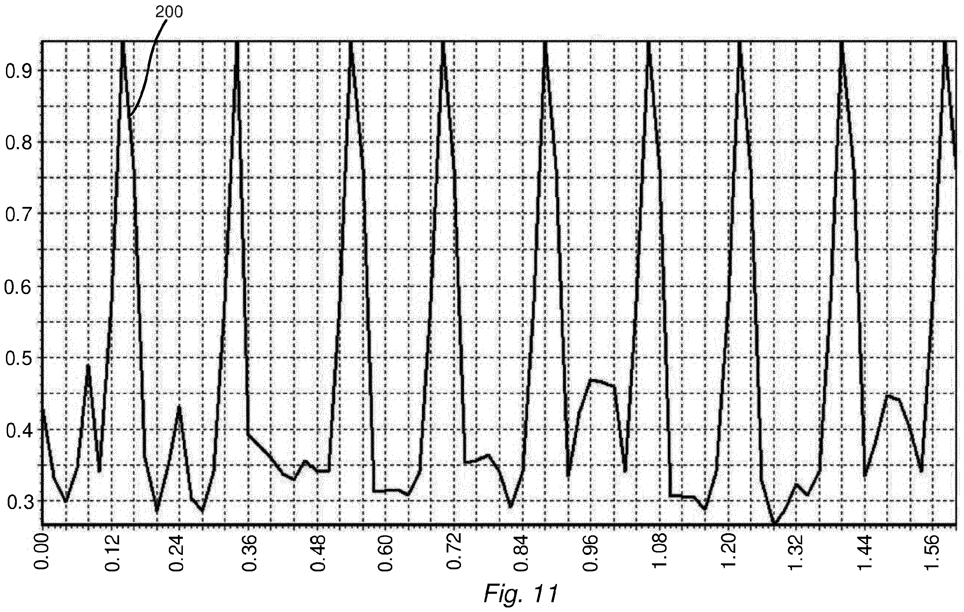

In Fig. 11 is a graph 200 of how the friction coefficient varies along the length of an electric road track 100 according to the teachings herein. The friction enhancing portions 100 tested are formed according to the friction enhancing portions 100 shown in Fig. 3.

As is evident from the graph 200, the test rig passes over 9 friction enhancing portions 100 which each increases the friction significantly to a peak friction coefficient of 1. An average friction coefficient of 0,5 was achieved over the length of the 1,6 m long section of electric road track 100 that was tested. The distance between two friction enhancing portions 100 in the section of the electric road track 10 tested was 100 mm, decreasing this distance would increase the average friction coefficient and vice versa.

An average friction coefficient of 0,5 is however considered sufficient in terms of achieving an acceptable road surface for fulfilling safety requirements.

The increased average friction provided allows for instance the electric road track 10 to be made wider. This would bring along other benefits such as allowing a vehicle 12 travelling over the electric road track 10 to be guided using a lane-keeping function without having to provide advanced controlling of the power collectors 14a, 14b, 14c to make sure these are in the correct position in relation to the electric road track 10. The power collectors 14a, 14b, 14c could thus be made less complex, improving the simplicity and possibly the reliability of the provision of electric power to the vehicle 12 from the electric road track 10.

The person skilled in the art realizes that the present invention by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims. The invention is defined by the appended claims.

## Claims

1. An electric road track (10) configured to conductively provide electric power to a vehicle (12), the electric road track (10) comprising:
a base (20) extending along the electric road track (10) and being configured to be arranged against a road (11),
a contact line (30), extending along the base (20), via which power collectors (14a, 14b, 14c) of the vehicle (12) is configured to conductively draw electric power from the electric road track (10),
**characterized in that**
the contact line (30) comprises friction enhancing portions (100) arranged along the electric road track (10),
each friction enhancing portion (100) comprising a friction element (108) and a plate (102), wherein the plate (102) is resiliently depressible towards the base (20) upon a force exceeding a threshold value is exerted onto said plate (102), such that the friction element (108) is exposed.

2. The electric road track (10) according to claim 1, wherein the threshold value is a force corresponding to a weight of 10 kg.

3. The electric road track (10) according to claim 1 or 2, wherein the friction enhancing portion (100) comprises a frame (106) surrounding the plate (102).

4. The electric road track (10) according to any one of claims 1 to 3, wherein the plate (102) comprises a plurality of openings (112) and wherein a friction element (108) is arranged in each of the plurality of openings (112).

5. The electric road track (10) according to any one of the preceding claims, wherein the friction element (100) is fixedly arranged in relation to the base (20).

6. The electric road track (10) according to claim 4, wherein an area of the plurality of openings (112) is 10% to 40% of a upper surface area of the plate (102).

7. The electric road track (10) according to any one of the preceding claims, wherein the plate (102) has an extension in the longitudinal direction of the electric road track (10) between 50 mm and 400 mm and an extension in a direction transverse to the longitudinal direction of electric road track (10) between 50 mm and 400 mm.

8. The electric road track (10) according to any one of the preceding claims, wherein the electric road track (10) further comprises a seal (136) configured to seal between the plate (102) and the friction element (108).

9. The electric road track (10) according to any one of the preceding claims, wherein the plate (102) of each friction enhancing portion (100) is connected to the electric road track (10) via a resilient member (104).

10. The electric road track (10) according to any one of the preceding claims, wherein the plate (102) is electrically conductive.

11. The electric road track (10) according to claim 9, wherein the resilient member (104) is electrically conductive.

## Patentansprüche

1. Stromschiene (10) für eine elektrifizierte Straße, die dazu konfiguriert ist, leitend einem Fahrzeug (12) elektrische Leistung bereitzustellen, wobei die Stromschiene (10) für eine elektrifizierte Straße Folgendes umfasst:
eine Basis (20), die sich entlang der Stromschiene (10) für eine elektrifizierte Straße erstreckt und dazu konfiguriert ist, gegen eine Straße (11) angeordnet zu werden,
eine Kontaktleitung (30), die sich entlang der Basis (20) erstreckt und über die Stromabnehmer (14a, 14b, 14c) des Fahrzeugs (12) dazu konfiguriert sind, leitend elektrische Leistung von der Stromschiene (10) für eine elektrifizierte Straße zu beziehen,
**dadurch gekennzeichnet,**
**dass** die Kontaktleitung (30) reibungsverstärkende Abschnitte (100) umfasst, die entlang der Stromschiene (10) für eine elektrifizierte Straße angeordnet sind,
wobei jeder reibungsverstärkende Abschnitt (100) ein Reibungselement (108) und eine Platte (102) umfasst, wobei die Platte (102) elastisch in Richtung der Basis (20) eindrückbar ist, wenn eine Kraft, die einen Schwellenwert überschreitet, auf die Platte (102) ausgeübt wird, sodass das Reibungselement (108) freigelegt wird.

2. Stromschiene (10) für eine elektrifizierte Straße nach Anspruch 1, wobei der Schwellenwert eine Kraft ist, die einem Gewicht von 10 kg entspricht.

3. Stromschiene (10) für eine elektrifizierte Straße nach Anspruch 1 oder 2, wobei der reibungsverstärkende Abschnitt (100) einen Rahmen (106) umfasst, der die Platte (102) umgibt.

4. Stromschiene (10) für eine elektrifizierte Straße nach einem der Ansprüche 1 bis 3, wobei die Platte (102) eine Vielzahl von Öffnungen (112) umfasst und wobei ein Reibungselement (108) in jeder der Vielzahl von Öffnungen (112) angeordnet ist.

5. Stromschiene (10) für eine elektrifizierte Straße nach einem der der vorhergehenden Ansprüche, wobei das Reibungselement (100) in Bezug auf die Basis (20) fest angeordnet ist.

6. Stromschiene (10) für eine elektrifizierte Straße nach Anspruch 4, wobei ein Bereich der Vielzahl von Öffnungen (112) 10 % bis 40 % eines Oberflächenbereiches der Platte (102) beträgt.

7. Stromschiene (10) für eine elektrifizierte Straße nach einem der vorhergehenden Ansprüche, wobei die Platte (102) eine Ausdehnung in Längsrichtung der Stromschiene (10) für eine elektrifizierte Straße zwischen 50 mm und 400 mm und eine Ausdehnung in einer Richtung quer zu der Längsrichtung der Stromschiene (10) für eine elektrifizierte Straße zwischen 50 mm und 400 mm aufweist.

8. Stromschiene (10) für eine elektrifizierte Straße nach einem der vorhergehenden Ansprüche, wobei die Stromschiene (10) für eine elektrifizierte Straße ferner eine Dichtung (136) umfasst, die dazu konfiguriert ist, zwischen der Platte (102) und dem Reibungselement (108) abzudichten.

9. Stromschiene (10) für eine elektrifizierte Straße nach einem der vorhergehenden Ansprüche, wobei die Platte (102) jedes reibungsverstärkenden Abschnitts (100) über ein elastisches Element (104) mit der Schiene (10) für eine elektrifizierte Straße verbunden ist.

10. Stromschiene (10) für eine elektrifizierte Straße nach einem der vorhergehenden Ansprüche, wobei die Platte (102) elektrisch leitend ist.

11. Stromschiene (10) für eine elektrifizierte Straße nach Anspruch 9, wobei das elastische Element (104) elektrisch leitend ist.

## Revendications

1. Piste de route électrique (10) configurée pour fournir de l'énergie électrique par conduction à un véhicule (12), la piste de route électrique (10) comprenant :
une base (20) s'étendant le long de la piste de route électrique (10) et étant configurée pour être agencée contre une route (11),
une ligne de contact (30), s'étendant le long de la base (20), par l'intermédiaire de laquelle des collecteurs d'énergie (14a, 14b, 14c) du véhicule (12) sont configurés pour extraire de l'énergie électrique par conduction de la piste de route électrique (10),
**caractérisée en ce que**
la ligne de contact (30) comprend des parties améliorant la friction (100) agencées le long de la piste de route électrique (10),
chaque partie améliorant la friction (100) comprenant un élément de friction (108) et une plaque (102), dans laquelle la plaque (102) peut être abaissée de manière élastique vers la base (20) lorsqu'une force dépassant une valeur seuil est exercée sur ladite plaque (102), de telle sorte que l'élément de friction (108) soit exposé.

2. Piste de route électrique (10) selon la revendication 1, dans laquelle la valeur seuil est une force correspondant à un poids de 10 kg.

3. Piste de route électrique (10) selon la revendication 1 ou 2, dans laquelle la partie améliorant la friction (100) comprend un cadre (106) entourant la plaque (102) .

4. Piste de route électrique (10) selon l'une quelconque des revendications 1 à 3, dans laquelle la plaque (102) comprend une pluralité d'ouvertures (112) et dans laquelle un élément de friction (108) est agencé dans chacune de la pluralité d'ouvertures (112).

5. Piste de route électrique (10) selon l'une quelconque des revendications précédentes, dans laquelle l'élément de friction (100) est agencé de manière fixe par rapport à la base (20).

6. Piste de route électrique (10) selon la revendication 4, dans laquelle une zone de la pluralité d'ouvertures (112) représente 10 % à 40 % d'une surface supérieure de la plaque (102) .

7. Piste de route électrique (10) selon l'une quelconque des revendications précédentes, dans laquelle la plaque (102) présente une extension dans la direction longitudinale de la piste de route électrique (10) entre 50 mm et 400 mm et une extension dans une direction transversale à la direction longitudinale de la piste de route électrique (10) entre 50 mm et 400 mm.

8. Piste de route électrique (10) selon l'une quelconque des revendications précédentes, dans laquelle la piste de route électrique (10) comprend en outre un joint (136) configuré pour assurer l'étanchéité entre la plaque (102) et l'élément de friction (108).

9. Piste de route électrique (10) selon l'une quelconque des revendications précédentes, dans laquelle la plaque (102) de chaque partie améliorant la friction (100) est reliée à la piste de route électrique (10) par l'intermédiaire d'un élément élastique (104).

10. Piste de route électrique (10) selon l'une quelconque des revendications précédentes, dans laquelle la plaque (102) est électriquement conductrice.

11. Piste de route électrique (10) selon la revendication 9, dans laquelle l'élément élastique (104) est électriquement conducteur.
